Europäisches Patentamt

European Patent Office

Office européen des brevets

(11) Veröffentlichungsnummer : **0 131 093**
B1

# (12) EUROPÄISCHE PATENTSCHRIFT

(45) Veröffentlichungstag der Patentschrift :
09.09.87

(21) Anmeldenummer : 84103894.6

(22) Anmeldetag : 07.04.84

(51) Int. Cl.⁴ : **H 02 P   8/00, G 06 M   1/10**

(54) **Gedämpfter Schrittmotor zum Antrieb eines Messwerks, insbesondere eines Rollenzählwerks mit einer Steuerschaltungsanordnung.**

(30) Priorität : 06.07.83 DE 3324257

(43) Veröffentlichungstag der Anmeldung :
16.01.85 Patentblatt 85/03

(45) Bekanntmachung des Hinweises auf die Patenterteilung : 09.09.87 Patentblatt 87/37

(84) Benannte Vertragsstaaten :
DE FR GB SE

(56) Entgegenhaltungen :
DE-A- 2 061 912
DE-B- 2 061 911

(73) Patentinhaber : VDO Adolf Schindling AG
Gräfstrasse 103
D-6000 Frankfurt/Main (DE)

(72) Erfinder : Rüb, Walter
Neuenhainer Weg 15
D-6231 Sulzbach/Ts. (DE)
Erfinder : Brüggemann, Ulrich
Neurothstrasse 2
D-6370 Oberursel (DE)

(74) Vertreter : Könekamp, Herbert, Dipl.-Ing. et al
Sodener Strasse 9
D-6231 Schwalbach (DE)

**Beschreibung**

Die Erfindung betrifft einen gedämpften Schrittmotor zum Antrieb eines Meßwerks, insbesondere eines Rollenzählwerks mit einer wenigstens einen Verstärker als gesteuerten Schalter aufweisenden Steuerschaltungsanordnung, durch die zwei Spulen des Schrittmotors mit annähernd rechteckförmigen Impulsen nach Maßgabe von durch einen Meßgeber gelieferten Meßimpulsen gespeist werden, wobei der Verstärker als Verzögerungsglied erster Ordnung ausgebildet ist, so daß die Flanken der in wenigstens eine Spule eingespeisten Impulse abgeflacht werden.

Zum Stand der Technik gehört ein mechanischer Wegstreckenzähler mit einem Elektromotor, der Ziffernräder durch einen Schnecken/Schneckenradgetriebezug antreibt. Der Elektromotor kann vom Schritt- oder Gleichstromtyp sein. Der Motor wird mit einem Erregersignal, beispielsweise einer Folge von bipolaren, die Fahrzeuggeschwindigkeit angebenden Impulsen gespeist. Um eine unerwünschte Umkehr des mit dem Motor in Verbindung stehenden Wegstreckenzählers sowie ein Rattern der die Drehenergie vom Motor auf die Ziffernräder übertragenden Getrieberäder zu unterbinden, wird ein Lager nach Art einer Einwegkupplung für die Lagerung der Antriebswelle des Elektromotors verwendet (DE-OS-31 27 141). Diese Einwegkupplung bedingt aber eine nennenswerte Erhöhung des Bauaufwandes und ist zudem einem Verschleiß unterworfen.

Es sind bereits viele Versuche unternommen worden, die Geräuschentwicklung von mit Schrittmotoren verbundenen Meßwerken, insbesondere Zählwerken zu dämpfen. Die Geräuschentwicklung ist besonders störend, wenn solche Meßwerke oder Zählwerke in Verbindung mit anderen, jedoch elektronisch wirkenden Anzeigeeinrichtungen eingesetzt werden, die naturgemäß praktisch keine Geräusche erzeugen. Ursache für die Geräuschentwicklung der Meßwerke bzw. Zählwerke ist die diskontinuierliche Schrittbewegung des Schrittmotors. Sein Rotor schwingt aufgrund seines Massenträgheitsmomentes über die jeweils zu erreichende Sollstellung hinaus und wieder zurück. Dadurch werden durch das üblicherweise zwischen den Getriebeelementen — Schnecke und Schneckenrad — vorhandene Zahnflankenspiel Geräusche verursacht. Die von dem Schrittmotor ausgelösten oszillierenden Schwingungen werden bis zu den Zahlenrollen und Zählertrieben übertragen.

Bei einem zum Stand der Technik gehörenden Reihenzähler hat man versucht, den Einfluß von Motorschwingungen im Untersetzungsgetriebe durch einen hohen Übersetzungsfaktor abzubauen, so daß die Zahlenrollen und -triebe möglichst nicht mehr oszillieren. Diese hohe Übersetzung bedingt aber einen größeren Aufwand als ein geringerer Übersetzungsfaktor.

Es kann daran gedacht werden, eine Geräuschminderung durch Verwendung von relativ weichen Werkstoffen für die Getriebeelemente, wie Schnecke und Schneckenrad, sowie Triebräder zu erzielen. Die Herstellung dieser Teile aus weichen Werkstoffen, die mit anderen Werkstoffen an besonderen Stellen zu verbinden sind, ist aber aufwendig. Außerdem reichen solche Maßnahmen zum Erzielen der gewünschten Laufruhe oft noch nicht aus.

Weiterhin können mechanische Dämpfungseinrichtungen, insbesondere nach dem Reibkraftprinzip vorgesehen werden. Durch diese Dämpfungmaßnahme wird jedoch das nutzbare Motordrehmoment schwächer, und die Funktionsgrenzen des Motors werden eingeschränkt. Zum wenigstens teilweisen Ausgleich muß die Anlaufspannung bzw. die Höhe von den Motor speisenden Impulsen vergrößert werden. Dadurch ist die Anwendbarkeit von Reibungsdämpfungsmitteln begrenzt.

Auch andere mechanische Dämpfungseinrichtungen können nur bedingt unter Schwierigkeiten eingesetzt werden, da sie in der Regel zusätzlichen Raum beanspruchen und/oder den Bauaufwand oder die Funktion für die Kombination des Schrittmotors mit dem Meßwerk erhöhen.

Öldämpfungen, gegebenenfalls in Verbindung mit Epilamisieren haben den Nachteil, daß der Dämpfungsgrad wesentlich von der Ölmenge und dessen Viskosität abhängt. Bei entweichendem Öl sind Dämpfungsverringerungen oder unter Umständen Funktionsstörungen zu befürchten.

Nach einem anderen Prinzip kann der Rotor des Schrittmotors über einen Federspeicher mit den Getriebeelementen — Schnecke oder Schneckenrad — verbunden werden. Ein solcher Federspeicher kann aber nur optimal für eine Frequenz ausgelegt werden, während für den Antrieb von Meßwerken der Schrittmotor üblicherweise mit einem größeren Frequenzgang, beispielsweise von 0 bis 4 Hertz, beaufschlagt wird.

Zu der vorliegenden Erfindung gehört daher die Aufgabe, einen gedämpften Schrittmotor mit einer Steuerschaltungsanordnung so auszubilden, daß eine wirksame Geräuschdämpfung ohne Herabsetzung der Funktionssicherheit bei gleicher Erregerpulshöhe bzw. Schrittfrequenz erzielt wird. Wichtig ist dabei, daß auch bei Anwendung der erfindungsgemäßen Dämpfung ein großer Frequenzgang der Meßimpulse fehlerfrei auf das Meßwerk weitergeleitet wird.

Aus der DE-B-20 61 911 ist ein gedämpfter Schrittmotor der eingangs genannten Art bekannt, der in der Laufrichtung umschaltbar ist und vier Motorwicklungen besitzt. Jede dieser Wicklungen wird einzeln gedämpft.

Die vorher genannte Aufgabe wird durch die in dem kennzeichnenden Teil des Anspruchs 1 angegebene Erfindung gelöst.

Diese Ausbildung bedeutet eine besonders geschickte elektrische Maßnahme, um Oszillationen des Rotors des Schrittmotors und damit Geräusche, insbesondere in einem die Rotorbewegung auf ein Meßwerk übertragenden Getriebe zu vermeiden. Der Aufwand zur Geräuschdämpfung ist besonders herabgesetzt. Diese vorteilhaften Wirkungen sind durch die infolge des verzögerten Abklingens der Impulse, die in die eine Spule eingespeist werden, erreichten Überlappungen der Spulenerregung erklärbar.

Der zusätzliche Aufwand für diese elektrische Dämpfung ist besonders gering, da sie in dem Verstärkerkreis angeordnet ist. Die Dämpfung wird so groß gewählt, daß die Flanken des normalerweise annähernd rechteckförmigen Impulses, der den Schrittmotor speist, nach einer Ausgleichsfunktion abgeflacht werden. Die Impulse setzen, wie es sich aus der weiter unten erläuterten Zeichnung $U_{M1}$ in Beziehung zu $U_{M2}$ ergibt, praktisch unverzögert ein und verlaufen mit abnehmender Steilheit bis zu dem waagerechten Impulsteil. Mit umgekehrtem zeitlichen Verlauf flachen die Impulse wieder ab, wobei eine Verlängerung des Impulses im Bereich kleinerer Energie eintritt. Die grundsätzliche Phasenbeziehung zwischen zwei Impulsfolgen mit denen beispielsweise zwei Spulen des Schrittmotor um 180 elektrische Grad versetzt gespeist werden, bleibt aber erhalten.

In einer typischen besonders vorteilhaften Schaltungsanordnung nach Anspruch 2 genügt als Gegenkopplungs-Kondensator ein Kondensator mit einer Kapazität von etwa 4 bis 5 μF.

Dieser Kondensator ist wenig aufwendig und kompakt etwa im Gegensatz zu einer Abflachung der die Spulen speisenden Impulsfolgen mit zwei den Spulen unmittelbar parallelgeschalteten Kondensatoren. In Versuchen wurden im letztgenannten Fall Kondensatorkapazitäten in der Größenordnung von 200 bis über 450 μF als notwendig gefunden.

Besonders bemerkenswert ist, daß wegen dieser elektrischen Dämpfung die Anlaufspannung (Impulshöhe) nur geringfügig zu erhöhen war, während sich die größtzulässige Schrittfrequenz fast verdoppelte.

Die Erfindung wird im folgenden anhand einer Zeichnung mit vier Figuren erläutert. Es zeigen :

Figur 1 ein Schaltbild der mit dem Schrittmotor verbundenen Steuerschaltungsanordnung ;

Figur 2 ein Pulsdiagramm der Meßimpulse ;

Figur 3 ein Pulsdiagramm der Spannung $U_{M2}$, mit der eine der beiden Spulen des Schrittmotors erregt wird und

Figur 4 ein entsprechendes Impulsdiagramm für die Folge der verzögerten Impulse $U_{M1}$, mit denen die andere Spule gespeist wird.

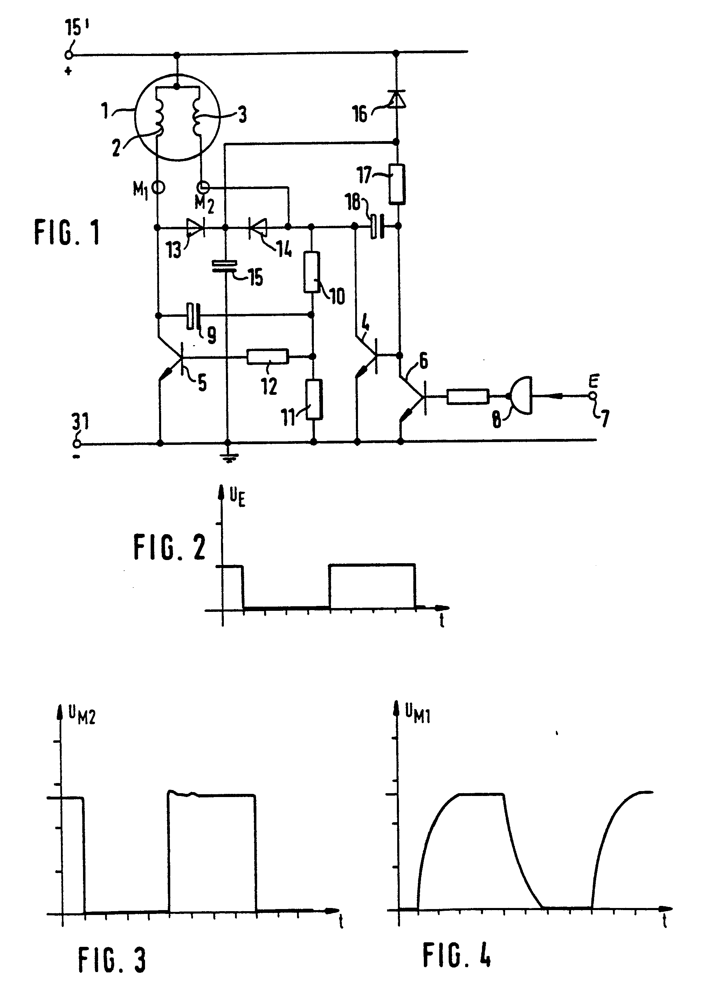

In Fig. 1 ist mit 1 ein niederfrequenter Einphasenschrittmotor mit einem Zweispulensystem dargestellt, dessen beide Spulen mit 2 und 3 bezeichnet sind. Der Schrittmotor ist dazu vorgesehen, ein nicht dargestellte Rollenzählwerk bzw. einen Reihenzähler über ein ebenfalls nicht dargestelltes Getriebe anzutreiben.

Die elektrische Steuerschaltungsanordnung zur Erzeugung der Impulse nach den Fig. 3 und 4, die auch als Speiseimpulse für den Schrittmotor bezeichnet werden, umfaßt im wesentlichen zwei als gesteuerte Schalter betriebene Verstärker-Transistoren 4 und 5 sowie einen den Verstärker-Transistor steuernden Treiber-Transistor 6.

Der Treiber-Transistor wird von einem nicht dargestellten Meßwertgeber an der Klemme 7 über einen Inverter 8 mit Meßimpulsen gemäß Fig. 2 gespeist. Der Treiber-Transistor steuert seinerseits den Verstärker-Transistor 4, der somit Speiseimpulse für die Spule 3 erzeugt, die im wesentlichen rechteckförmig sind, wie die Spannung $U_{M2}$ in Fig. 3 zeigt.

Um 180 elektrische Grad phasenverschoben zu den Speiseimpulsen in Fig. 3 werden durch den Verstärker-Transistor 5 Speiseimpulse für die Spule 2 erzeugt. Der Verstärker-Transistor 5 wird hierzu durch den Verstärker-Transistor 4 geöffnet, wenn dieser gesperrt ist, und umgekehrt entsprechend wird der Verstärker-Transistor 5 gesperrt, wenn der Verstärker-Transistor 4 leitet. Der Verlauf der Impulse $U_{M1}$ ist aber nicht genau analog zu dem Verlauf der Impulse $U_{M2}$ ;

Vielmehr werden die Flanken der Impulse $U_{M1}$ gemäß Fig. 4 abgeflacht. Hierzu ist eine Rückkopplung von dem Kollektor des Verstärker-Transistors 5 über den Kondensator 9 zu der Basis dieses Verstärker-Transistors vorgesehen. Der Kondensator 9 ist hierzu zwischen dem Kollektoranschluß und einem Spannungsteiler 10, 11 angeschlossen, während der Spannungsteiler über einen Vorwiderstand 12 mit der Basis des Verstärker-Transistors 5 gekoppelt ist. Die in Fig. 1 noch gezeigten Dioden 13 und 14 dienen zum Abbau von Umschalt-Spannungsspitzen. Ein Kondensator 15 ist zur Störspannungsunterdrückung zur Entstörung eines Radioempfangs zwischen die gemeinsame Verbindung der Dioden 13, 14 und Masse eingeschaltet. Schließlich dienen eine Diode 16 zur Spannungsstabilisierung einer Batteriespannung an den Klemmen 31 und 15' sowie eine Widerstandskondensatorkombination 17, 18 zur Spannungsglättung, bzw. Unterdrückung von Störimpulsen.

Der Schrittmotor legt pro 1 Hertz Impulsfrequenz des Meßimpulses zwei Schritte zurück, und zwar wegen der Dämpfung der Speiseimpulse der einen Spule 2 unter minimaler Geräuschentwicklung.

Die in Fig. 1 dargestellte Schaltungsanordnung dient also zur Beeinflussung unipolarer Speiseimpulse, die in eine Spule eines Schrittmotors eingespeist werden. Die Schaltungsanordnung arbeitet mit üblichen Meßimpulsen.

Eine besonders geeignete Dimensionierung der Mittel zum Erzielen eines verzögerten Zeitverhaltens eines Verstärker-Transistors sieht einen den Verstärker-Transistor rückkoppelnden Kondensator von 4,7 μF und einen Basis-Vorwiderstand von 560 Ω vor.

**Patentansprüche**

1. Gedämpfter Schrittmotor (1) zum Antrieb eines Meßwerks, insbesondere eines Rollenzählwerks, mit einer wenigstens einen Verstärker (4, 5) als gesteuerten Schalter aufweisenden Steuerschaltungsanordnung, durch die zwei Spulen (2, 3) des Schrittmotors (1) mit annähernd rechteckförmigen Impulsen nach Maßgabe von durch einen Meßgeber gelieferten Meßimpulsen gespeist werden, wobei der Verstärker (4, 5) als Verzögerungsglied erster Ordnung ausgebildet ist, so daß die Flanken der in wenigstens eine Spule (2) eingespeisten Impulse abgeflacht werden, dadurch gekennzeichnet, daß nur eine der beiden Spulen (2, 3) durch den als Verzögerungsglied ausgebildeten Verstärker (Verstärker-Transistor 5) gespeist wird, während die zweite der beiden Spulen (2, 3) über einen unverzögerten Verstärker (Verstärker-Transistor 4) beaufschlagt wird.

2. Gedämpfter Schrittmotor (1) mit Steuerschaltungsanordnung nach Anspruch 1, dadurch gekennzeichnet, daß der Verstärker (Verstärker-Transistor 5) zur Bildung des verzögerten Zeitverhaltens mit einem Kondensator (9) gegengekoppelt ist.

**Claims**

1. Damped stepping motor (1) for driving a measuring mechanism, especially a cyclometer type of counting mechanism, with a control circuit arrangement which has at least one amplifier (4, 5) as a controlled switch and through which two coils (2, 3) of the stepping motor (1) are supplied with approximately square wave pulses in accordance with measurement pulses delivered by a measurement signal emitter, the amplifier (4, 5) being constructed as a delay element of the first order, so that the edges of the pulses fed into at least one coil (2) are flattened, characterised in that only one of the two coils (2, 3) is supplied by the amplifier (amplifier transistor 5) constructed as a delay element, whereas the second of the two coils (2, 3) is acted upon via a non-delayed amplifier (amplifier transistor 4).

2. Damped stepping motor (1) with control circuit arrangement according to claim 1, characterised in that the amplifier (amplifier transistor 5) is connected in negative feedback with a capacitor (9) for producing the delayed time behaviour.

**Revendications**

1. Moteur (1) pas à pas amorti, destiné à entraîner un équipage de mesure, notamment une minuterie ou un compteur à rouleaux, comportant un dispositif de circuit de commande présentant au moins un amplificateur (4, 5) comme circuit commandé, par l'intermédiaire duquel les deux enroulements (2, 3) du moteur (1) pas à pas sont alimentés en des impulsions approximativement rectangulaires au prorata d'impulsions de mesure fournies par un émetteur ou transmetteur de mesure, l'amplificateur (4, 5) étant réalisé à titre d'élément temporisateur de premier ordre de manière à aplanir ou arrondir les flancs des impulsions introduites dans au moins l'un (2) des enroulements, moteur caractérisé en ce que l'un seulement des deux enroulements (2, 3) est alimenté par les amplificateurs (transistor amplificateur 5) réalisés en tant qu'éléments de temporisation, cependant que le second des deux enroulements (2, 3) est alimenté par l'intermédiaire d'un amplificateur (transistor amplificateur 4) non temporisé.

2. Moteur (1) pas à pas amorti comportant un circuit de commande selon la revendication 1, caractérisé en ce que l'amplificateur (transistor amplificateur 5) est relié en contre-réaction avec un condensateur (9) pour réaliser le comportement temporisé.

FIG. 1

FIG. 2

FIG. 3

FIG. 4